# EUROPEAN PATENT SPECIFICATION

(11) **EP 4 223 719 B1**
(45) Date of publication and mention of the grant of the patent: **26.03.2025**
(21) Application number: 22187705.3
(22) Date of filing: 29.07.2022
(51) Int. Cl.: C04B 26/28, C04B 111/28

(54) **BUILDING MATERIAL**
BAUMATERIAL
MATÉRIAU DE CONSTRUCTION

(30) Priority: 23.03.2022 ES 202230262
(43) Date of publication of application: 09.08.2023
(73) Proprietor: Poplac Development S.L., 46980 Paterna (VALENCIA) (ES)
(72) Inventor: BLASCO LAHIGUERA, Asunción Ana, 46002 Valencia (ES)
(74) Representative: Clarke, Modet y Cía., S.L.

(56) References cited:
- EP-A1- 2 840 196
- EP-A2- 1 944 423
- WO-A1-2013/096891
- CN-A- 108 821 651
- FR-A1- 2 556 738
- US-A1- 2010 272 940

## Description

### FIELD OF THE INVENTION

The present invention belongs to the technical field of new building materials. More specifically, it describes a building material with thermal, acoustic and fire-retardant insulation properties comprising algae or crushed dead aquatic plants, a vegetable binder and an aqueous solution of an organic acid.

### BACKGROUND OF THE INVENTION

Sustainable building materials are recycled or are those that can be recovered or recycled and are not harmful to the environment. These materials must have good energy efficiency, long life and also have adequate properties for different uses in building. The materials used in building must be fireproof, acoustic and/or thermal insulators, in addition to having high mechanical resistance and low density.

For example, CN108821651A describes a sound and heat insulation material and a preparation method thereof and relates to the field of building materials. The sound and heat insulation material includes wastepaper pulp in its composition. Specifically, the sound and heat insulation material include 100-120 parts of modified glutinous rice starch, 60-90 parts of glass beads, 50-80 parts of sound insulation particles, 50-70 parts of heat insulation particles, 20-40 parts of organic fibers, 20-30 parts of plant fibers, 10-20 parts of a wastepaper pulp, 2-10 parts of glycerin, 2-8 parts of a lubricant, 2-8 parts of a plasticizer, 2-6 parts of a dispersing agent and 100-120 parts of water. Also, the preparation method comprises the following steps: (1) preparing the modified glutinous rice starch; (2) preparing a slurry; (3) preparing a base material; (4) carrying out high pressure spray synthesis. The preparation method has the advantages of environmental protection and energy saving.

In general, seaweeds have very interesting building characteristics, since they can be used as insulating material without the need to go through complex industrial processes, and even without the use of chemical products.

The Fraunhofer Institute (Germany) has carried out several studies on cleaning (removing remains of sand, stones and other debris) and dismemberment of the remains of the Posidonia seaweed to form fibers for the manufacture of building panels. Tests showed that these fibers were able to store 20% more energy than wood, making them a highly effective natural thermal and acoustic insulating material. However, to achieve the dimensional stability of materials based on this type of algae, the addition of binders or additives is necessary.

EP1944423A2 describes the use of *Posidonia Oceanica* fibers together with a suitable inorganic and organic binder, such as plaster (calcium sulfate), cement, aluminum and silicon oxide/dioxide, lime (calcium carbonate), soluble glass, phosphate binder or synthetic resin binder, as an insulating material in building products. However, this document does not detail the mechanical properties of the products and also uses binders that are not very compatible with the environmental purpose of reusing algae.

ES2538576A1 describes a method for manufacturing panels made from 60-80% residual fibers of *Posidonia Oceanica,* 20-40% thermoplastic fibers (specifically polylactic acid) and between 0-40% natural fibers (specifically hemp, sisal, flax or cotton fibers) by hot compression. However, the method of manufacturing such panels requires high temperatures and pressures, which make the method expensive due to the amount of resources used.

EP2840196A1 describes a process for the production of a thermoacoustic insulating plate comprising *Posidonia* and a mixture of diluted vegetable starch. However, this document does not detail the mechanical properties of the product obtained and the production process takes a long time, since the seaweed needs a maturation of 3 months and a formwork of at least 2 days.

Therefore, there is a need to find building materials that are sustainable and that take advantage of residues such as Posidonia algae, that do not include toxic or environmentally harmful compounds in their formulation, that are simple to obtain, that do not require a high consumption of resources and that also have acceptable or improved properties for use in building.

### DESCRIPTION OF THE INVENTION

The present invention solves the problems in the state of the art by providing a building material with improved mechanical properties, and which reduces the manufacturing time of some products, such as insulating panels made of this material, to a one day.

The building material of the present invention has a lower density than cement, but exhibits excellent mechanical properties, so it could be used as cement, more specifically as a biocement.

In addition, the use of this material as an alternative to cement provides the advantage of reducing energy consumption in the manufacture of cement.

The solution found by the inventors is a building material that is a good thermal, acoustic and fire-retardant insulator that comprises crushed dead aquatic plants, a binder of vegetable origin together with an aqueous solution of an organic acid. The acid donates protons and the water acts as a pH regulator.

The use of an aqueous solution of an organic acid improves the mechanical properties of the material and, on the other hand, acts as an antimicrobial agent. Therefore, the material does not include toxic materials that can generate dangerous leachates, or petroleum derivatives. It is, therefore, an ideal material to implement the circular and sustainable economy in the building sector.

In a first aspect, the invention relates to a building material comprising crushed dead algae or aquatic plants and a binder of plant origin, characterized in that it comprises an aqueous solution of an organic acid.

The aqueous solution of an organic acid may be generated from lactic acid, acetic acid, fumaric acid, glycolic acid, citric acid, malic acid or formic acid. In a preferred mode, the acid is acetic acid. The source of acetic acid can be glacial acetic acid or vinegars, which are diluted to a pH of 4-5.5. Reducing the pH of the mixture reduces microbial load, prevents algae decomposition and prevents generation of bad odors.

The algae or aquatic plants are collected dead on the shores of beaches and are later crushed. In a preferred mode, the algae or aquatic plants are selected from *Posidonia Oceanica,* sargassum or *Rugulopterix okamurae.*

In a preferred mode, the crushed dead algae or aquatic plants are 1-5 mm in size. Sizes smaller than 1 mm reduce compressive strength, while sizes larger than 5 mm generate curved materials.

The binder of vegetable origin comprises polysaccharides, preferably starch and more preferably corn, cassava or wheat starch.

In a particular embodiment, the building material of the present invention comprises reinforcing agents, water-repellent agents, plasticizing agents, fire-retardant agents, or mixtures thereof.

In a preferred mode, the flame retardant agent is potassium bicarbonate.

In a preferred mode, the reinforcing agent is calcium carbonate.

In a preferred mode, the plasticizing agent is polycaprolactone, which also improves flexing properties.

In another particular embodiment, the building material of the present invention comprises of dried crushed *Posidonia Oceanica* with a size of 1-5 mm, wheat starch, an aqueous solution of acetic acid with pH 4-5.5, potassium bicarbonate, calcium carbonate and polycaprolactone.

In another particular embodiment, the building material of the present invention comprises 16-18% of dried crushed *Posidonia Oceanica* crushed with a size of 1-5 mm, 10-20% of starch, 1-10% of aqueous solution of acetic acid with pH 4.6, 2-20% of potassium bicarbonate, 8-25% of calcium carbonate, 3-5% of polycaprolactone and 35-60% of water. All the detailed percentages are expressed in weight/weight.

In a particular embodiment, the building material may comprise:
- sludge, obtained from sewage sludge that reduces density, improves thermal insulation and increases compressive strength,
- ash, which improves compressive strength,
- sawdust, obtained from plant biomass,
- corks to increase sound insulation, and/or
- foaming agents to reduce density.

In another aspect, the invention relates to a method of manufacturing a building material as defined above, comprising the steps of:
a) Screening, sifting, crushing algae or dry dead aquatic plants; and
b) mixing the crushed algae or aquatic plants with a binder of vegetable origin and an aqueous solution of an organic acid.

The building material obtained by the method of the present invention has a compressive strength of more than 10 MPa, a flexural strength of more than 3,0 MPa, and a tensile strength of more than 5,0 MPa.

The properties obtained for the materials of the present invention were:
- Density: 200 kg/m³-1.000 kg/m³ depending on the amount of calcium carbonate added and the pressing.
- Stability to fire: Flame retardant. A1 (Non-combustible) - s1 (Low opacity of the smoke produced) - d0 (Does not produce inflamed droplets or particles).
- Behavior against water: Water repellent.
- Thermal insulation: Thermal conductivity: less than 0.035 W/m*K with a thickness of 15mm.
- Acoustic insulation: measurements made on 4 cm thick walls result in internal noise of 62-71 dB and external noise of 114-117 dB within the frequency spectrum between 500-10,000 Hz.

The building material described in the invention is biodegradable but its mechanical properties are maintained for at least 50 years.

In a particular embodiment, the method of the present invention additionally comprises a subsequent step of compressing and drying the mixture from step b).

In a preferred mode, in the method of the present invention, the aqueous solution of organic acid is an aqueous solution of acetic acid, the algae or aquatic plants are selected from *Posidonia Oceanica,* sargassum or *Rugulopterix okamurae* with a size of 1-5 mm and the vegetable-based binder is starch.

In another aspect, the invention relates to the use of a building material as defined above to manufacture prefabricated parts for modular buildings.

In the context of the present invention, a prefabricated part is understood as a material that has been manufactured in a location other than the location corresponding to its application or use. This prefabricated part can adopt different measures and forms to be able to carry out its assembly in the location of application or use. For example, this prefabricated part can be a plate or panel for interior divisions, false ceilings, partitions, etc.

The building material can be used to make sandwich panels. In a particular embodiment, the building material of the present invention comprises a cardboard layer/plate that covers at least one of the surfaces of the panel. Preferably, at least two surfaces or faces of the panel, so as to form a sandwich-type panel.

In another aspect, the invention relates to the use of a building material as defined above as a biocement to seal joints and as a fixative.

The material of the present invention allows the use of typical cement setting accelerators, such as sodium acetate, sodium bicarbonate, sodium carbonate or mixtures of them. Their addition allows sealing the material against water permeability by accelerating the setting process.

In the context of the present invention, "biocement" is understood as a cement of natural origin with the characteristics of cement.

### DESCRIPTION OF EMBODIMENT METHODS

### Example 1. Manufacturing method of a material of the present invention

Initially, dead Posidonia Oceanica leaves with a size between 1-5 mm were dried, screened, sieved and crushed. Leaves were then mixed with wheat starch and a solution of acetic acid (pH 4.6 dilution of wine vinegar in water). Finally, the mixture was conditioned in hermetic containers, controlling humidity.

The material obtained can be used as biocement.

### Example 2. Properties of the material of the present invention

Different samples of the material of the present invention were prepared using the same method described in example 1. The content of the components of each sample is detailed in Table 1.

**Table 1. Composition of the samples of the material of the present invention prepared in example 3**

| | **Sample No.** | | | |
|---|---|---|---|---|
| **Components (% by weight)** | **1** | **2** | **3** | **4** |
| *Posidonia Oceanica* | 40 | 37 | 18 | 16 |
| Starch | 20 | 20 | 20 | 15 |
| Acetic acid aqueous solution | 40 | 40 | 40 | 38 |
| Polycaprolactone | 0 | 3 | 3 | 5 |
| Potassium bicarbonate | 0 | 0 | 7 | 6 |
| Calcium carbonate | 0 | 0 | 12 | 20 |

All the detailed percentages are expressed in weight/weight.

Measurements of density, compressive strength and flexural strength were made for each of the samples. The values obtained are shown in Table 2.

**Table 2. Properties of the samples of the material of the present invention**

| | **Sample No.** | | | |
|---|---|---|---|---|
| **Properties** | **1** | **2** | **3** | **4** |
| **Density (Kg/m³)** | 500 | 600 | 700 | 800 |
| **Compression resistance (MPa)** | 6 | 10 | 14 | 18 |
| **Flexural resistance (MPa)** | - | - | - | 3 |

It is observed that the higher the density of the material, the higher the compressive strength obtained.

### Example 3. Building material of the present invention including cork, sludge and soap.

Cork, sludge and/or soap were added to sample 3 of example 2. The content of the components of each sample is detailed in Table 3.

**Table 3. Composition of the samples of the material of the present invention**

| | **Sample No.** | | | |
|---|---|---|---|---|
| **Components (% by weight)** | **5** | **6** | **7** | **8** |
| Composition of sample No. 3 | 80 | 80 | 80 | 70 |
| Cork | 20 | 0 | 0 | 10 |
| Sewage sludge | 0 | 20 | 0 | 10 |
| Foaming agent | 0 | 0 | 20 | 10 |

All the detailed percentages are expressed in weight/weight.

With respect to the reference sample 3, sample 5 showed greater acoustic insulation, sample 6 greater mechanical resistance and sample 8 lower density.

### Example 4. Manufacturing method of a prefabricated insulating panel

The material obtained in example 1 was placed in molds and pressed at 20 KN, obtaining an insulating panel. The insulating panel was then dried in a convection-microwave oven and finally demolded and palletized.

### Example 5. Manufacture of sandwich panels

The panel obtained in example 4 was covered with cardboard plates on both surfaces and used to make partitions. Said panel was pierced with a drill and a weight of 30 kg was applied. It was observed that the panel did not deteriorate, showing great resistance.

### Example 6. Manufacture of a biocement from the panels

The panel described in example 4 was crushed and stored in hermetic bags, in which the amount of water required to manufacture the biocement is indicated. The biocement obtained has the same properties and composition as the biocement obtained in example 1 and whose characteristics are presented in example 2. Therefore, the material of the present invention can be considered reversible.

## Claims

1. Building material comprising crushed dead algae or aquatic plants and a binder of vegetable origin, **characterized in that** it comprises an aqueous solution of an organic acid.

2. Building material according to claim 1, **characterized in that** the aqueous organic acid solution is an aqueous acetic acid solution.

3. Building material according to claim 1 or 2, **characterized in that** the algae or aquatic plants are selected from *Posidonia Oceanica,* sargassum or *Rugulopterix okamurae.*

4. Building material according to any of claims 1 to 3, **characterized in that** the crushed dead algae or aquatic plants have a size of 1-5 mm.

5. Building material according to any of claims 1 to 4, **characterized in that** the binder of plant origin is starch.

6. Building material according to any of claims 1 to 5, **characterized in that** it comprises reinforcing agents, water-repellent agents, plasticizing agents, fire-retardant agents or mixtures thereof.

7. Building material according to any of claims 1 to 6, **characterized in that** it comprises:
- Dried crushed *Posidonia Oceanica* with a size of 1-5 mm;
- wheat starch;
- aqueous solution of acetic acid with pH 4-5.5;
- potassium bicarbonate;
- calcium carbonate; and
- polycaprolactone.

8. Building material according to any of claims 1 to 6, **characterized in that** it comprises:
- 16-18% by weight of dried crushed *Posidonia Oceanica* with a size of 1-5 mm;
- 10-20% by weight of starch;
- 1-10% by weight of aqueous solution of acetic acid with pH 4.6;
- 2-20% by weight of potassium bicarbonate;
- 8-25% by weight of calcium carbonate;
- 3-5% by weight of polycaprolactone; and
- 35-60% by weight of water.

9. Building material according to any of claims 1 to 8, **characterized in that** it also comprises cork, sludge, ashes, sawdust, foaming agents or mixtures thereof.

10. Manufacturing method of a building material according to any of claims 1 to 9, comprising the following steps of:
a) Drying, sifting, sieving and crushing algae or dead aquatic plants; and
b) mixing the crushed algae or aquatic plants with a binder of vegetable origin and an aqueous solution of an organic acid.

11. Manufacturing method according to claim 10, wherein said method further comprises a subsequent step of compressing and drying the mixture of step b).

12. Manufacturing method according to claim 10 or 11, **characterized in that** the aqueous solution of organic acid is an aqueous solution of acetic acid, the algae or crushed dead aquatic plants are selected from *Posidonia Oceanica,* sargassum or *Rugulopterix okamurae* with a size of 1-5 mm and the binder of vegetable origin is starch.

13. A building material obtained by the method according to claim 11, **characterized in that** the material has a mechanical resistance to compression greater than 10 MPa and a resistance to bending greater than 3 MPa.

14. Use of the building material according to any of claims 1 to 9, to manufacture prefabricated parts for modular buildings.

15. Use of the building material according to any of claims 1 to 9, as biocement to seal joints and fixative.

## Patentansprüche

1. Baumaterial, umfassend zerkleinerte tote Algen oder Wasserpflanzen und ein Bindemittel pflanzlichen Ursprungs, **dadurch gekennzeichnet, dass** es eine wässrige Lösung einer organischen Säure umfasst.

2. Baumaterial nach Anspruch 1, **dadurch gekennzeichnet, dass** die wässrige Lösung einer organischen Säure eine wässrige Essigsäurelösung ist.

3. Baumaterial nach Anspruch 1 oder 2, **dadurch gekennzeichnet, dass** die Algen oder Wasserpflanzen aus *Posidonia oceanica,* Golftange oder *Rugulopteryx okamurae* ausgewählt sind.

4. Baumaterial nach einem der Ansprüche 1 bis 3, **dadurch gekennzeichnet, dass** die zerkleinerten toten Algen oder Wasserpflanzen eine Größe von 1 bis 5 mm aufweisen.

5. Baumaterial nach einem der Ansprüche 1 bis 4, **dadurch gekennzeichnet, dass** das Bindemittel pflanzlichen Ursprungs Stärke ist.

6. Baumaterial nach einem der Ansprüche 1 bis 5, **dadurch gekennzeichnet, dass** es Verstärkungsmittel, wasserabweisende Mittel, Weichmacher, feuerhemmende Mittel oder Gemische davon umfasst.

7. Baumaterial nach einem der Ansprüche 1 bis 6, **dadurch gekennzeichnet, dass** es Folgendes umfasst:
- getrocknete, zerkleinerte *Posidonia oceanica* mit einer Größe von 1-5 mm;
- Weizenstärke;
- wässrige Essigsäurelösung mit einem pH-Wert von 4-5,5;
- Kaliumhydrogencarbonat;
- Calciumcarbonat; und
- Polycaprolacton.

8. Baumaterial nach einem der Ansprüche 1 bis 6, **dadurch gekennzeichnet, dass** es Folgendes umfasst:
- 16-18 Gew.-% an getrockneter, zerkleinerter *Posidonia oceanica* mit einer Größe von 1-5 mm;
- 10-20 Gew.-% Stärke;
- 1-10 Gew.-% einer wässrigen Essigsäurelösung mit einem pH-Wert von 4,6;
- 2-20 Gew.-% Kaliumhydrogencarbonat;
- 8-25 Gew.-% Calciumcarbonat;
- 3-5 Gew.-% Polycaprolacton; und
- 35-60 Gew.-% Wasser.

9. Baumaterial nach einem der Ansprüche 1 bis 8, **dadurch gekennzeichnet, dass** es auch Kork, Schlamm, Asche, Sägemehl, Schaummittel oder Gemische davon umfasst.

10. Herstellungsverfahren für ein Baumaterial nach einem der Ansprüche 1 bis 9, umfassend die folgenden Schritte:
a) Trocknen, Sieben, Sichten und Zerkleinern von Algen oder toten Wasserpflanzen; und
b) Mischen der zerkleinerten Algen oder Wasserpflanzen mit einem Bindemittel pflanzlichen Ursprungs und einer wässrigen Lösung einer organischen Säure.

11. Herstellungsverfahren nach Anspruch 10, wobei das Verfahren ferner einen nachfolgenden Schritt des Verdichtens und Trocknens des Gemischs aus Schritt b) umfasst.

12. Herstellungsverfahren nach Anspruch 10 oder 11, **dadurch gekennzeichnet, dass** die wässrige Lösung einer organischen Säure eine wässrige Essigsäurelösung ist, die Algen oder zerkleinerten toten Wasserpflanzen aus *Posidonia oceanica,* Golftange oder *Rugulopteryx okamurae* mit einer Größe von 1 bis 5 mm ausgewählt sind und das Bindemittel pflanzlichen Ursprungs Stärke ist.

13. Baumaterial, erhalten durch das Verfahren nach Anspruch 11, **dadurch gekennzeichnet, dass** das Material eine mechanische Druckfestigkeit von mehr als 10 MPa und eine Biegefestigkeit von mehr als 3 MPa aufweist.

14. Verwendung des Baumaterials nach einem der Ansprüche 1 bis 9 zur Herstellung von vorgefertigten Teilen für modulare Gebäude.

15. Verwendung des Baumaterials nach einem der Ansprüche 1 bis 9 als Biozement zum Abdichten von Fugen und als Fixiermittel.

## Revendications

1. Matériau de construction comprenant des algues ou des plantes aquatiques mortes broyées et un liant d'origine végétale, **caractérisé en ce qu'**il comprend une solution aqueuse d'un acide organique.

2. Matériau de construction selon la revendication 1, **caractérisé en ce que** la solution aqueuse d'acide organique est une solution aqueuse d'acide acétique.

3. Matériau de construction selon la revendication 1 ou 2, **caractérisé en ce que** les algues ou plantes aquatiques sont choisies parmi *Posidonia* Oceanica, sargasse ou *Rugulopterix okamurae.*

4. Matériau de construction selon l'une quelconque des revendications 1 à 3, **caractérisé en ce que** les algues ou plantes aquatiques mortes broyées ont une taille de 1-5 mm.

5. Matériau de construction selon l'une quelconque des revendications 1 à 4, **caractérisé en ce que** le liant d'origine végétal est de l'amidon.

6. Matériau de construction selon l'une quelconque des revendications 1 à 5, **caractérisé en ce qu'**il comprend des agents de renforcement, des agents imperméabilisants, des agents plastifiants, des agents retardateurs de la flamme ou des mélanges de ceux-ci.

7. Matériau de construction selon l'une quelconque des revendications 1 à 6, **caractérisé en ce qu'**il comprend :
- *Posidonia Oceanica* broyée séchée ayant une taille de 1-5 mm ;
- de l'amidon de maïs ;
- une solution aqueuse d'acide acétique à pH 4-5,5 ;
- du bicarbonate de potassium ;
- du carbonate de calcium ; et
- de la polycaprolactone.

8. Matériau de construction selon l'une quelconque des revendications 1 à 6, **caractérisé en ce qu'**il comprend :
- 16-18% en poids de *Posidonia Oceanica* broyée séchée ayant une taille de 1-5 mm ;
- 10-20% en poids d'amidon ;
- 1-10% en poids de solution aqueuse d'acide acétique à pH 4,6 ;
- 2-20% en poids de bicarbonate de potassium ;
- 8-25% en poids de carbonate de calcium ;
- 3-5% en poids de polycaprolactone ; et
- 35-60% en poids d'eau.

9. Matériau de construction selon l'une quelconque des revendications 1 à 8, **caractérisé en ce qu'**il comprend en outre du liège, de la boue, des cendres, de la sciure, des agents de moussants ou des mélanges de ceux-ci.

10. Procédé de fabrication d'un matériau de construction selon l'une quelconque des revendications 1 à 9, comprenant les étapes suivantes :
a) séchage, tamisage, criblage et broyage d'algues ou de plantes aquatiques mortes ; et
b) mélange des algues ou plantes aquatiques broyées avec un liant d'origine végétale et une solution aqueuse d'un acide organique.

11. Procédé de fabrication selon la revendication 10, dans lequel ledit procédé comprend en outre une étape ultérieure de compression et séchage du mélange de l'étape b).

12. Procédé de fabrication selon la revendication 10 ou 11, **caractérisé en ce que** la solution aqueuse d'acide organique est une solution aqueuse d'acide acétique, les algues ou les plantes aquatiques mortes broyées sont choisies parmi *Posidonia Oceanica,* sargasse ou *Rugulopterix okamurae* avec une taille de 1-5 mm et le liant d'origine végétale et l'amidon.

13. Matériau de construction obtenu par le biais du procédé selon la revendication 11, **caractérisé en ce que** le matériau présente une résistance mécanique à la compression supérieure à 10 MPa et une résistance à la flexion supérieure à 3 MPa.

14. Utilisation du matériau de construction selon l'une quelconque des revendications 1 à 9, pour fabriquer des pièces préfabriquées pour des bâtiments modulaires.

15. Utilisation du matériau de construction selon l'une quelconque des revendications 1 à 9, comme biociment pour sceller des joints et de fixation.
